# EUROPEAN PATENT SPECIFICATION

(11) **EP 3 101 985 B1**
(45) Date of publication and mention of the grant of the patent: **24.10.2018**
(21) Application number: 14886598.3
(22) Date of filing: 19.03.2014
(51) Int. Cl.: H04W 74/08, H04W 84/12

(54) **MULTICHANNEL ACCESS METHOD AND APPARATUS**
MEHRKANALIGES ZUGANGSVERFAHREN UND VORRICHTUNG
PROCÉDÉ ET APPAREIL D'ACCÈS MULTICANAL

(43) Date of publication of application: 07.12.2016
(73) Proprietor: HUAWEI TECHNOLOGIES CO., LTD., Shenzhen Guangdong 518129 (CN)
(72) Inventor: LI, Yunbo, Shenzhen Guangdong 518129 (CN); LUO, Yi, Shenzhen Guangdong 518129 (CN); LOC, Peter, Shenzhen Guangdong 518129 (CN)
(74) Representative: Thun, Clemens
(86) International application number: PCT/CN2014/073703
(87) International publication number: WO 2015/139236

(56) References cited:
- EP-A2- 2 001 176
- WO-A1-2012/064502
- WO-A2-2010/002183
- CN-A- 1 883 161
- CN-A- 101 114 867
- CN-A- 101 977 445
- CN-A- 102 497 640
- ETRI: "Channel design and scheduling for out-of-coverage D2D communications", 3GPP DRAFT; R1-134334, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Guangzhou, China; 20131007 - 20131011 28 September 2013 (2013-09-28), XP050717476, Retrieved from the Internet: URL:http://www.3gpp.org/ftp/tsg_ran/WG1_RL 1/TSGR1_74b/Docs/ [retrieved on 2013-09-28]

## Description

### TECHNICAL FIELD

The present invention relates to the field of communications technologies, and in particular, to a multi-channel access method and apparatus.

### BACKGROUND

With rapid evolution of a wireless local area network (Wireless Local Access Network, WLAN for short) standard, increasingly large bandwidth is aggregated in a WLAN system to acquire a higher transmission rate. In the WLAN standard, before data transmission, a station generally reserves a channel of a period of time in advance for the station, where the reserved channel is used for subsequent data transmission of the station. Therefore, bandwidth of the channel reserved by the station determines available bandwidth in an entire subsequent data transmission process.

In conventional art, a specific process of reserving a channel by a station is: when a first device needs to performs data transmission with a second device, the first device monitors a channel; when the first device determines that the channel is an idle channel, the first device triggers a backoff procedure, that is, starts a backoff counter to generate a random number to implement the backoff procedure; every time an idle time of the channel reaches one timeslot (Timeslot), 1 is subtracted from the random number generated by the backoff counter. When the random number generated by the backoff counter is reduced to 0, the first device selects bandwidth of the channel and sends a channel reservation frame on the channel, where the channel reservation frame is used as reservation of the channel by the first device; and the first device performs data transmission with the second device on a reserved channel.

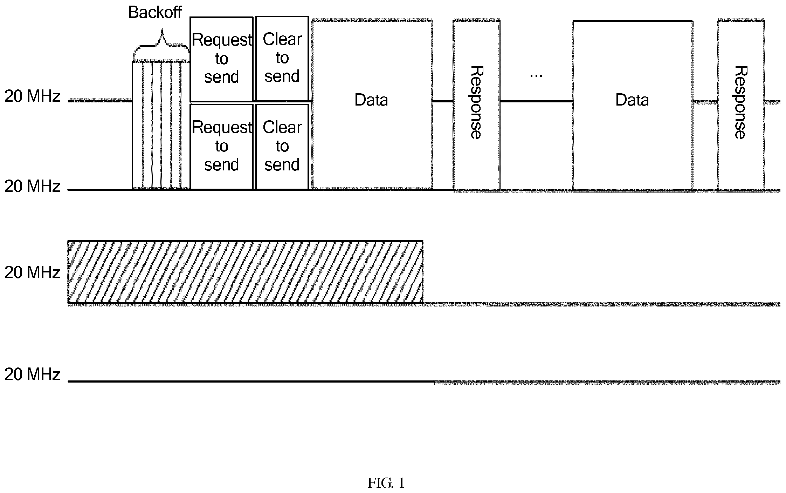

As shown in FIG. 1, in FIG. 1, a channel with a diagonal box is used to indicate that the channel is a busy channel, and a channel with no diagonal box is used to indicate that the channel is an idle channel. A first device sends a request to send (Request To Send, RTS for short) frame to a second device on an idle primary 40 MHz channel. When the second device receives a channel reservation frame, the second device returns a clear to send (Clear To Send, CTS for short) frame to the first device to reserve a channel. After the first device receives the CTS frame, the first device determines that the second device has reserved the channel, and performs data transmission.

However, the following problem is exposed in a solution in the prior art for reserving a channel by a station: when a station is reserving a channel, bandwidth of the channel is determined at one time, and during data transmission of the station, the station can perform data transmission by using only the reserved channel, which causes low channel utilization efficiency and a channel resource waste 3GPP document R1-134334 discloses channel design and scheduling for out of coverage D2D communications. In particular it is disclosed frame structure, channel design, and control mechanism for out-of-coverage D2D communications, synchronous multi-channel frame structure for D2D broadcasting.

### SUMMARY

The present invention is defined by the independent claims. Embodiments are defined by the dependent claims. Embodiments of the present invention provide a multi-channel access method and apparatus, which resolve a problem that a station cannot use an idle non-reserved channel in a data transmission process.

In a first aspect a multi-channel access method is provided, wherein a first device performs data transmission with a second device on a first reserved channel, and the method comprises:
- determining, by the first device, a transmission status of the first device on the first reserved channel;
- if the transmission status of the first device on the first reserved channel is a non-sending state, identifying, by the first device, whether a non-reserved channel except the first reserved channel is in an idle state;
- triggering, by the first device, a backoff procedure if the non-reserved channel is in the idle state;
- if the backoff procedure ends and the transmission status of the first device on the first reserved channel is a sending state, sending, by the first device, a channel reservation frame on the non-reserved channel, wherein the channel reservation frame is used to enable the first device to use the non-reserved channel as a second reserved channel; and
   if the backoff procedure ends and the transmission status of the first device on the first reserved channel is a receiving state, continuing identifying, by the first device, whether the non-reserved channel is in the idle state, and
   sending the channel reservation frame on the non-reserved channel if the non-reserved channel is in the idle state when the transmission status of the first device on the first reserved channel is the sending state; and
- performing, by the first device, data transmission with the second device on the first reserved channel and the second reserved channel.

In a first implementation form of the first aspect the identifying, by the first device, whether the non-reserved channel except the first reserved channel is in the idle state specifically comprises:
acquiring, by the first device, a receive power value of the non-reserved channel within a preset time;
determining, by the first device, whether the receive power value is less than a preset power threshold; and
if the receive power value is less than the power threshold, determining, by the first device, that the non-reserved channel is in the idle state; or if the receive power value is greater than or equal to the power threshold, determining, by the first device, that the non-reserved channel is in a busy state.

In a second implementation form of the first aspect, if the first device is specifically a station STA with no data to send, the sending, by the first device, the channel reservation frame on the non-reserved channel specifically comprises:
when the backoff procedure ends and the transmission status of the second device on the first reserved channel is the receiving state, sending, by the STA, the channel reservation frame on the non-reserved channel.

In a third implementation form of the first aspect, when the first device is specifically an access point AP, the method further comprises:
receiving, by the AP, a first control frame sent by the second device, wherein the first control frame comprises identifier information of a third reserved channel reserved by the second device; and
performing, by the AP, data transmission with the second device on any one of the first reserved channel, the second reserved channel, or the third reserved channel according to the identifier information of the third reserved channel.

In a fourth implementation form of the first aspect, when the first device is specifically a station STA, after accessing, by the first device, the second reserved channel, the method further comprises:
sending, by the STA, a second control frame to the second device, wherein the second control frame comprises identifier information of the second reserved channel, so that the second device performs data transmission with the STA on the first reserved channel and the second reserved channel according to the identifier information of the second reserved channel.

In a second aspect a multi-channel access apparatus is provided configured to perform any of the above methods.

Therefore, in the multi-channel access method and apparatus according to the
embodiments of the present invention, a first device performs data transmission with a second device on a first reserved channel, and at the same time, identifies whether a non-reserved channel is in an idle state; when the non-reserved channel is in an idle state, the first device triggers a backoff procedure and sends a channel reservation frame on the non-reserved channel; the first device uses the non-reserved channel as a second reserved channel and performs data transmission with the second device on the first reserved channel and the second reserved channel. Therefore, after reserving some channels, a station constantly reserves new idle channels in a data transmission process, and performs data transmission by using the reserved channels and the newly reserved idle channels, thereby improving channel utilization efficiency and saving channel resources.

### BRIEF DESCRIPTION OF DRAWINGS

FIG. 1 is a schematic diagram of a channel access mechanism in the prior art;
FIG. 2 is a flowchart of a multi-channel access method according to Embodiment 1 of the present invention;
FIG. 3 is a schematic diagram of reserving a channel by a device according to an embodiment of the present invention;
FIG. 4 is a schematic diagram of continuous channel reservation according to an embodiment of the present invention;
FIG. 5 is a sequence diagram of reserving a channel by an AP according to Embodiment 2 of the present invention;
FIG. 6 is a sequence diagram of reserving a channel by a STA according to Embodiment 3 of the present invention;
FIG. 7 is a sequence diagram of reserving a channel by a STA according to Embodiment 4 of the present invention;
FIG. 8 is a schematic structural diagram of a multi-channel access apparatus according to Embodiment 5 of the present invention;
FIG. 9 is a schematic structural diagram of another multi-channel access apparatus according to Embodiment 5 of the present invention; and
FIG. 10 is a schematic structural diagram of hardware of a multi-channel access apparatus according to Embodiment 6 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

For better understanding of the embodiments of the present invention, the following uses specific embodiments to provide further explanations and descriptions with reference to the accompanying drawings, and the embodiments constitute no limitation on the embodiments of the present invention.

### Embodiment 1

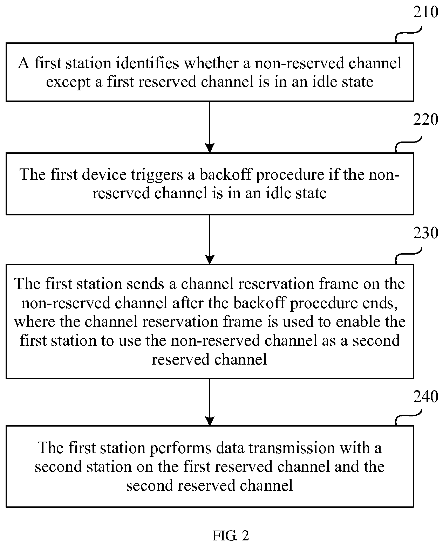

FIG. 2 is used as an example in the following to describe in detail a multi-channel access method provided in Embodiment 1 of the present invention. FIG. 2 is a flowchart of the multi-channel access method according to Embodiment 1 of the present invention. This embodiment of the present invention is executed by a first device or an application module loaded in the first device. As shown in FIG. 2, this embodiment specifically includes the following steps:

Step 210: The first device identifies whether a non-reserved channel except the first reserved channel is in an idle state.

Specifically, before executing this step, the first device performs data transmission with a second device on the first reserved channel. It may be understood that, in this embodiment of the present invention, the first device may reserve the first reserved channel for data transmission with the second device by using a channel reservation scheme in the prior art, which is not further described herein.

Further, that the first device identifies whether a non-reserved channel except the first reserved channel is in an idle state specifically includes:
acquiring, by the first device, a receive power value of the non-reserved channel within a preset time; determining, by the first device, whether the receive power value is less than a preset power threshold; and if the receive power value is less than the power threshold, determining, by the first device, that the non-reserved channel is in an idle state; or if the receive power value is greater than or equal to the power threshold, determining, by the first device, that the non-reserved channel is in a busy state.

Step 220: The first device triggers a backoff procedure if the non-reserved channel is in an idle state.

Specifically, according to the determining in step 210, the first device triggers the backoff procedure if the non-reserved channel is in an idle state.

Further, the backoff procedure may be specifically implemented in a manner of generating a random backoff number. In an example, the first device starts a backoff counter that is included in the first device, and the backoff counter generates any random number to implement the backoff procedure. It may be understood that, in the backoff procedure, the first device still periodically identifies whether the non-reserved channel is in an idle state, and every time an idle state time of the non-reserved channel is one period of time (the period of time is preset), 1 is subtracted from the random number generated by the backoff counter; if the first device identifies that the non-reserved channel changes from an idle state to a busy state, the backoff counter is suspended, and the backoff counter does not continue to perform the backoff procedure until the first device identifies that the non-reserved channel is in an idle state.

In this embodiment of the present invention, any other backoff mechanism that is used to avoid causing collision when multiple stations send data at the same time may further be used in the backoff procedure, for example, a backoff mechanism based on a probability P.

Step 230: The first device sends a channel reservation frame on the non-reserved channel after the backoff procedure ends, where the channel reservation frame is used to enable the first device to use the non-reserved channel as a second reserved channel.

Specifically, the backoff procedure ends when the random number generated by the backoff counter is 0. The first device sends the channel reservation frame on the non-reserved channel in an appropriate time, and the channel reservation frame is used to enable the first device to use the non-reserved channel as the second reserved channel.

The appropriate time specifically refers to a time in which the first device or the second device is in a non-receiving state on the first reserved channel.

Further, the first device may send the channel reservation frame on the non-reserved channel in a broadcasting manner, and the second device that receives the channel reservation frame needs to keep silent on the second reserved channel, or not to perform sending or replying until being scheduled or triggered by the first device. For example, after receiving scheduling from the first device, the second device sends data during being scheduled. For another example, after receiving data from the first device, the second device sends a corresponding reply frame.

Step 240: The first device performs data transmission with the second device on the first reserved channel and the second reserved channel.

Specifically, after the first device completes channel reservation on the non-reserved channel, the first device may perform data transmission with the second device on the first reserved channel and the second reserved channel. Therefore, after reserving some channels, the first device constantly acquires idle channels in a data transmission process, and performs data transmission by using the reserved channels and the acquired idle channels, thereby improving channel utilization efficiency and saving channel resources.

Optionally, before step 210 in this embodiment of the present invention, the method further includes a step of determining, by the first device, a transmission status of the first reserved channel. By using this step, the first device can determine the transmission status of the first reserved channel and identify, when the first reserved channel is in a non-sending state, whether the non-reserved channel is in an idle state. Specific steps are as follows:
determining, by the first device, a transmission status of the first device on the first reserved channel; and
when the transmission status of the first device on the first reserved channel is a non-sending state, identifying, by the first device, whether the non-reserved channel is in an idle state.

Specifically, the first device determines the transmission status of the first device on the first reserved channel. When the transmission status of the first device on the first reserved channel is a non-sending state, the first device executes step 210. When the transmission status of the first device on the first reserved channel is a sending state, the first device does not execute step 210 and subsequent steps, and the first device continues to determine the transmission status of the first device on the first reserved channel.

In this embodiment of the present invention, the non-sending state specifically includes a receiving state and an idle state. The idle state is specifically a neither sending nor receiving state.

It should be noted that, in this embodiment of the present invention, it is assumed that the first device has only one radio frequency link within a range of a frequency band, that is, the first device cannot send data on one channel and receive data on another channel at the same time. Therefore, when sending data on the first reserved channel, the first device cannot identify, at the same time on the non-reserved channel, whether the non-reserved channel is in an idle state. Only when the first device is in a receiving state or an idle state on the first reserved channel, the first device can identify, on the non-reserved channel, whether the non-reserved channel is in an idle state. If the first device has multiple radio frequency links, the first device can send and receive data on different channels, and at the same time, identify whether the non-reserved channel is in an idle state. This implementation case may be not limited to the method proposed in this embodiment of the present invention, but higher hardware costs are required.

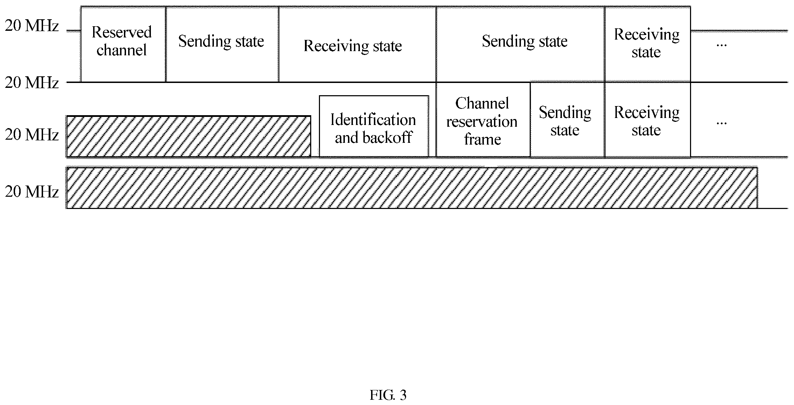

For example, as shown in FIG. 3, FIG. 3 is a schematic diagram of reserving a channel by a device according to an embodiment of the present invention. In FIG. 3, a channel with a diagonal box is used to indicate that this channel is a busy channel, and a channel with no diagonal box is used to indicate that this channel is an idle channel. In this embodiment of the present invention, when the transmission status of the first device on the first reserved channel is a receiving state, the first device identifies whether the non-reserved channel is in an idle state, and triggers the backoff procedure when the non-reserved channel is in an idle state. When the backoff procedure ends and the transmission status of the first device on the first reserved channel is a sending state, the first device sends the channel reservation frame on the non-reserved channel and reserves the non-reserved channel.

It should be noted herein that, when the first device is specifically a station (station, STA for short) with no data to send and the second device is an access point (Access Point, AP for short), the STA is in a receiving state regardless of whether the AP sends data to another STA on the first reserved channel or another STA sends data to the AP on the first reserved channel. When a transmission status of the AP on the first reserved channel is a receiving state, the STA identifies whether the non-reserved channel is in an idle state, and triggers the backoff procedure when the non-reserved channel is in an idle state. When the backoff procedure ends and the transmission status of the AP on the first reserved channel is a receiving state, the STA sends the channel reservation frame on the non-reserved channel and reserves the non-reserved channel.

Optionally, in this embodiment of the present invention, when the first device is specifically an access point AP, the method further includes a step of receiving, by the AP, a first control frame sent by the second device and performing, according to identifier information that is of a third reserved channel and that is included in the first control frame, data transmission with the second device on any one of the first reserved channel, the second reserved channel, or the third reserved channel. By using this step, the first device can perform data transmission with the second device on multiple idle non-reserved channels, thereby improving channel utilization efficiency and saving channel resources. Specific steps are as follows:
receiving, by the AP, the first control frame sent by the second device, where the first control frame includes the identifier information of the third reserved channel accessed by the second device; and
accessing, by the AP according to the identifier information of the third reserved channel, the third reserved channel, and performing data transmission with the second device on any one of the first reserved channel, the second reserved channel, or the third reserved channel.

Specifically, the AP receives the first control frame sent by the second device, where the first control frame includes the identifier information of the third reserved channel accessed by the second device. The AP performs data transmission with the second device on any one of the first reserved channel, the second reserved channel, or the third reserved channel according to the identifier information of the third reserved channel.

In this embodiment of the present invention, the second device is a non-AP station, and is specifically a STA. When the first device is an AP and the second device is a STA, the AP and the STA may reserve the non-reserved channel according to a described process of the foregoing step 210 to step 240. A process of reserving the non-reserved channel by the STA is the same as the described process of the foregoing steps, and is not further described herein.

The STA sends the first control frame to the AP, that is, the reserved third reserved channel is assigned or licensed to the AP, and the AP controls or schedules the third reserved channel.

Optionally, in this embodiment of the present invention, when the first device is specifically a STA, the method further includes a step of sending, by the STA, a second control frame to the second device so that the second device performs data transmission with the second device on the first reserved channel and the second reserved channel according to identifier information that is of the second reserved channel and that is included in the second control frame. By using this step, the first device can perform data transmission with the second device on multiple idle non-reserved channels, thereby improving channel utilization efficiency and saving channel resources. Specific steps are as follows:
sending, by the STA, the second control frame to the second device, where the second control frame includes the identifier information of the second reserved channel, so that the second device performs data transmission with the STA on the first reserved channel and the second reserved channel according to the identifier information of the second reserved channel.

Specifically, after accessing the second reserved channel, the STA sends the second control frame to the second device, where the second control frame includes the identifier information of the second reserved channel, so that the second device performs data transmission with the STA on the first reserved channel and the second reserved channel according to the identifier information of the second reserved channel.

In this embodiment of the present invention, the second device is an AP. When the first device is a STA and the second device is an AP, both the AP and the STA may reserve the non-reserved channel according to a described process of the foregoing step 210 to step 240. A process of reserving the non-reserved channel by the AP is the same as the described process of the foregoing steps, and is not further described herein.

After the STA accesses the second reserved channel, the STA sends the second control frame to the AP, that is, the accessed second reserved channel is assigned or licensed to the AP, and the AP controls and schedules the second reserved channel.

Optionally, in this embodiment of the present invention, the first device may reserve channels on multiple channels in an interleaving manner. This manner not only meets an unlicensed spectrum standard but also helps maintain latency of service implementation by using multiple channels.

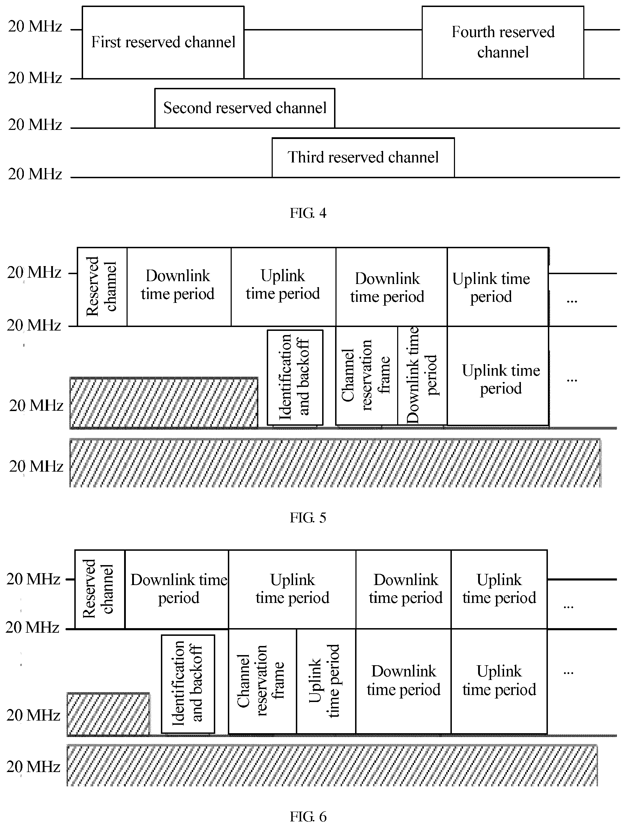

Specifically, as shown in FIG. 4, the first device first successfully reserves the first reserved channel, and performs data transmission by using the first reserved channel. At the same time, the first device performs channel reservation for the second time on the non-reserved channel according to the solution described in the foregoing step 210 to step 240, and accesses the second reserved channel.

Because a starting time at which the first device performs channel reservation for the second time is after a starting time at which the first device performs channel reservation for the first time, according to a limit of a longest time of single channel reservation, an ending time of the second time of channel reservation is also after an ending time of the first time of channel reservation. Therefore, during data transmission on the first reserved channel and the second reserved channel, the first device may continue to perform channel reservation for the third time on another non-reserved channel.

Therefore, according to the multi-channel access method provided in this embodiment of the present invention, a first device performs data transmission with a second device on a first reserved channel, and at the same time, identifies whether a non-reserved channel is in an idle state; when the non-reserved channel is in an idle state, the first device triggers a backoff procedure and sends a channel reservation frame on the non-reserved channel; the first device uses the non-reserved channel as a second reserved channel and performs data transmission with the second device on the first reserved channel and the second reserved channel. Therefore, after reserving some channels, a station constantly reserves new idle channels in a data transmission process, and performs data transmission by using the reserved channels and the newly reserved idle channels, thereby improving channel utilization efficiency and saving channel resources.

### Embodiment 2

To facilitate real-time understanding of the present invention, the following specific embodiment provides a further explanation and description with reference to the accompanying drawings. The embodiment constitutes no limitation to the embodiments of the present invention.

In the foregoing Embodiment 1, the first device is specifically an AP, or the first device is specifically a STA. The following describes in detail a specific working process of the sending, by the first device, a channel reservation frame on the non-reserved channel in step 230 of the foregoing Embodiment 1. In this embodiment of the present invention, an example in which the first device is specifically an AP and the second device is specifically a STA is used for detailed description.

The AP performs data transmission with the STA on a first reserved channel. It may be understood that, in this embodiment of the present invention, the AP may reserve the first reserved channel for data transmission with the STA by using a channel reservation scheme in the prior art, which is not further described herein.

The AP acquires a receive power value of the non-reserved channel within a preset time; the AP determines whether the receive power value is less than a preset power threshold; and if the receive power value is less than the power threshold, the AP determines that the non-reserved channel is in an idle state; or if the receive power value is greater than or equal to the power threshold, the AP determines that the non-reserved channel is in a busy state.

According to the foregoing determining, if the non-reserved channel is in an idle state, the AP triggers a backoff procedure. A working process of the backoff procedure has been described in detail in the foregoing embodiment, and is not described herein.

When a random number generated by a backoff counter is 0, the backoff procedure ends, and the AP determines a transmission status of the AP on the first reserved channel.

When the backoff procedure ends and the transmission status of the AP on the first reserved channel is a sending state, the AP sends the channel reservation frame on the non-reserved channel, so as to ensure that sending and receiving time periods of the AP on the first reserved channel keep consistent with those on a second reserved channel, which is shown in FIG. 5.

When the backoff procedure ends and the transmission status of the AP on the first reserved channel is a receiving state, the AP identifies whether the non-reserved channel is in an idle state.

In FIG. 5, a channel with a diagonal box is used to indicate that this channel is a busy channel, and a channel with no diagonal box is used to indicate that this channel is an idle channel. In this embodiment of the present invention, the receiving state of the AP on the first reserved channel is corresponding to an uplink scheduling time period, and the sending state of the AP on the first reserved channel is corresponding to a downlink scheduling time period.

That is, when the AP is in the uplink scheduling time period, the AP identifies whether the non-reserved channel is in an idle state, and triggers the backoff procedure when the non-reserved channel is in an idle state; when the backoff ends and the AP is in the downlink scheduling time period, the AP sends the channel reservation frame on the non-reserved channel.

After the AP completes channel reservation on the non-reserved channel, the AP performs data transmission with the STA on the first reserved channel and the second reserved channel. Therefore, after reserving some channels, the AP constantly acquires idle channels in a data transmission process, and performs data transmission by using the reserved channels and the acquired idle channels, thereby improving channel utilization efficiency and saving channel resources.

In this embodiment of the present invention, the AP further receives a control frame sent by the STA, where the control frame includes identifier information of a third reserved channel reserved by the STA. The AP performs data transmission with the STA on any one of the first reserved channel, the second reserved channel, or the third reserved channel according to the identifier information of the third reserved channel.

In this embodiment of the present invention, the STA may reserve the non-reserved channel according to a described process of the foregoing step 210 to step 240. A process of reserving the non-reserved channel by the STA is the same as the described process of the foregoing steps, and is not further described herein.

After the STA reserves the third reserved channel, the STA sends the control frame to the AP, that is, the reserved third reserved channel is assigned or licensed to the AP, and the AP controls or schedules the third reserved channel.

It should be noted that, when the backoff procedure ends, if the AP determines that the AP is still in the uplink scheduling time period, the AP continues to identify, on the non-reserved channel on which the backoff procedure is completed, whether the non-reserved is in an idle state, so as to ensure that the non-reserved channel is in an idle state before the channel reservation frame is sent.

### Embodiment 3

To facilitate real-time understanding of the present invention, the following specific embodiment provides a further explanation and description with reference to the accompanying drawings. The embodiment constitutes no limitation to the embodiments of the present invention.

In the foregoing Embodiment 1, the first device is specifically an AP, or the first device is specifically a STA. The following describes in detail a specific working process of the sending, by the first device, a channel reservation frame on the non-reserved channel in step 230 of the foregoing Embodiment 1. In this embodiment of the present invention, an example in which the first device is specifically a STA and the second device is specifically an AP is used for detailed description.

The STA performs data transmission with the AP on a first reserved channel. It may be understood that, in this embodiment of the present invention, the STA may reserve the first reserved channel for data transmission with the AP by using a channel reservation scheme in the prior art, which is not further described herein.

The STA acquires a receive power value of the non-reserved channel within a preset time; the STA determines whether the receive power value is less than a preset power threshold; and if the receive power value is less than the power threshold, the STA determines that the non-reserved channel is in an idle state; or if the receive power value is greater than or equal to the power threshold, the STA determines that the non-reserved channel is in a busy state.

According to the foregoing determining, if the non-reserved channel is in an idle state, the STA triggers a backoff procedure. A working process of the backoff procedure has been described in detail in the foregoing embodiment, and is not described herein.

When a random number generated by a backoff counter is 0, the backoff procedure ends, and the STA determines a transmission status of the STA on the first reserved channel.

When the backoff procedure ends and the transmission status of the STA on the first reserved channel is a sending state, the STA sends the channel reservation frame on the non-reserved channel, so as to ensure that sending and receiving time periods of the AP on the first reserved channel keep consistent with those on a second reserved channel, which is shown in FIG. 6.

When the backoff procedure ends and the transmission status of the STA on the first reserved channel is a receiving state, the STA identifies whether the non-reserved channel is in an idle state.

In FIG. 6, a channel with a diagonal box is used to indicate that this channel is a busy channel, and a channel with no diagonal box is used to indicate that this channel is an idle channel. In this embodiment of the present invention, the receiving state of the STA on the first reserved channel is corresponding to an uplink scheduling time period, and the sending state of the STA on the first reserved channel is corresponding to a downlink scheduling time period.

That is, when the STA is in the downlink scheduling time period, the STA identifies whether the non-reserved channel is in an idle state, and triggers the backoff procedure when the non-reserved channel is in an idle state; when the backoff ends and the STA is in the uplink scheduling time period, the STA sends the channel reservation frame on the non-reserved channel.

After the STA completes channel reservation on the non-reserved channel, the STA sends a control frame to the AP, where the control frame includes identifier information of the second reserved channel. The STA assigns or licenses the reserved second reserved channel to the AP, and the AP controls or schedules the second reserved channel, so that the AP performs data transmission with the STA on the first reserved channel and the second reserved channel according to the identifier information of the second reserved channel. Therefore, after reserving some channels, the STA constantly acquires idle channels in a data transmission process, and performs data transmission by using the reserved channels and the acquired idle channels, thereby improving channel utilization efficiency and saving channel resources. The control frame may be a frame that is sent independently, or may be included in the channel reservation frame, which is not limited in this patent.

It should be noted that, when the backoff procedure ends, if the STA determines that the STA is still in the downlink scheduling time period, the STA continues to identify, on the non-reserved channel on which the backoff procedure is completed, whether the non-reserved is in an idle state, so as to ensure that the non-reserved channel is in an idle state before the channel reservation frame is sent.

### Embodiment 4

To facilitate real-time understanding of the present invention, the following specific embodiment provides a further explanation and description with reference to the accompanying drawings. The embodiment constitutes no limitation to the embodiments of the present invention.

In the foregoing Embodiment 1, the first device is specifically an AP, or the first device is specifically a STA. The following describes in detail a specific working process of the sending, by the first device, a channel reservation frame on the non-reserved channel in step 230 of the foregoing Embodiment 1. In this embodiment of the present invention, an example in which the first device is specifically a STA with no data to send and the second device is specifically an AP is used for detailed description.

The STA performs data transmission with the AP on a first reserved channel. It may be understood that, in this embodiment of the present invention, the STA may reserve the first reserved channel for data transmission with the AP by using a channel reservation scheme in the prior art, which is not further described herein.

The STA acquires a receive power value of the non-reserved channel within a preset time; the STA determines whether the receive power value is less than a preset power threshold; and if the receive power value is less than the power threshold, the STA determines that the non-reserved channel is in an idle state; or if the receive power value is greater than or equal to the power threshold, the STA determines that the non-reserved channel is in a busy state.

According to the foregoing determining, if the non-reserved channel is in an idle state, the STA triggers a backoff procedure. A working process of the backoff procedure has been described in detail in the foregoing embodiment, and is not described herein.

When a random number generated by a backoff counter is 0, the backoff procedure ends, and the STA determines a transmission status of the AP on the first reserved channel.

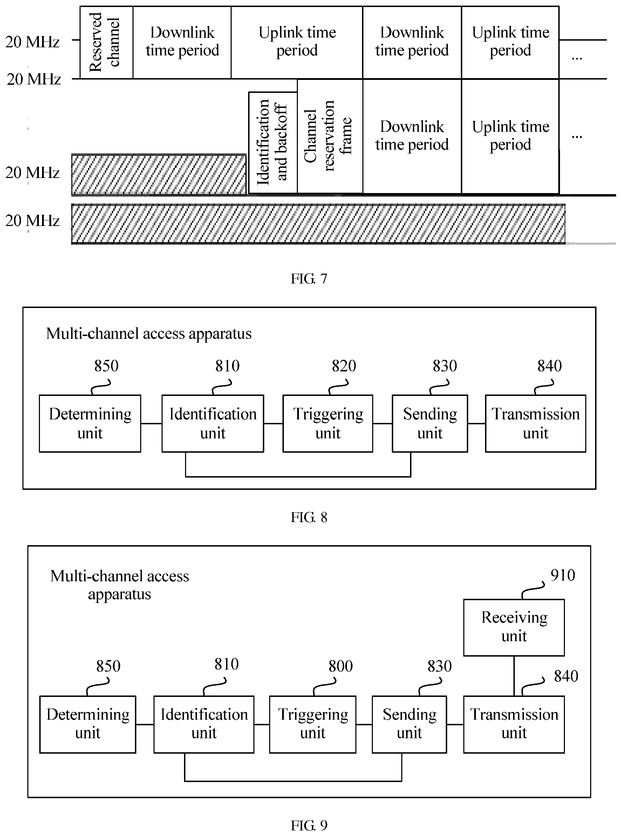

When the backoff procedure ends and the transmission status of the AP on the first reserved channel is a receiving state, the STA sends the channel reservation frame on the non-reserved channel, so as to ensure that sending and receiving time periods of the STA and the AP on the first reserved channel keep consistent with those on a second reserved channel, which is shown in FIG. 7.

In FIG. 7, a channel with a diagonal box is used to indicate that this channel is a busy channel, and a channel with no diagonal box is used to indicate that this channel is an idle channel. In this embodiment of the present invention, the receiving state of the AP on the first reserved channel is corresponding to an uplink scheduling time period, and is also corresponding to a sending state (uplink scheduling time period) of the STA on the non-reserved channel.

That is, when the STA is in the uplink scheduling time period, the STA identifies whether the non-reserved channel is in an idle state, and triggers the backoff procedure when the non-reserved channel is in an idle state; when the backoff ends and the AP is in the uplink scheduling time period on the first reserved channel, the STA sends the channel reservation frame on the non-reserved channel. After the STA completes channel reservation on the non-reserved channel, the STA sends a control frame to the AP, where the control frame includes identifier information of the second reserved channel. The STA assigns or licenses the reserved second reserved channel to the AP, and the AP controls or schedules the second reserved channel, so that the AP performs data transmission with the STA on the first reserved channel and the second reserved channel according to the identifier information of the second reserved channel. Therefore, after reserving some channels, the STA constantly acquires idle channels in a data transmission process, and performs data transmission by using the reserved channels and the acquired idle channels, thereby improving channel utilization efficiency and saving channel resources. The control frame may be a frame that is sent independently, or may be included in the channel reservation frame, which is not limited in this patent.

It should be noted that, when the backoff procedure ends, if the STA determines that the STA is still in the downlink scheduling time period, the STA continues to identify, on the non-reserved channel on which the backoff procedure is completed, whether the non-reserved is in an idle state, so as to ensure that the non-reserved channel is in an idle state before the channel reservation frame is sent.

In this embodiment of the present invention, the STA may be specifically a terminal that actively reserves a channel after determining that no data needs to be sent on the first reserved channel; or may be a terminal that passively reserves a channel by means of scheduling by the AP.

### Embodiment 5

Accordingly, this embodiment of the present invention further provides a multi-channel access apparatus. An implementation structure of the apparatus is shown in FIG. 8, and the apparatus is used to implement the multi-channel access method in the foregoing embodiments of the present invention. The apparatus performs data transmission with a first device on a first reserved channel, and the apparatus includes the following units: an identification unit 810, a triggering unit 820, a sending unit 830, and an access unit 840.

The identification unit 810 is configured to identify whether a non-reserved channel except the first reserved channel is in an idle state;
the triggering unit 820 is configured to trigger a backoff procedure if the non-reserved channel is in an idle state;
the sending unit 830 is configured to send a channel reservation frame on the non-reserved channel after the backoff procedure ends, where the channel reservation frame is used to enable the apparatus to use the non-reserved channel as a second reserved channel; and
the transmission unit 840 is configured to perform data transmission with the first device on the first reserved channel and the second reserved channel.

The identification unit 810 is specifically configured to: acquire a receive power value of the non-reserved channel within a preset time;
determine whether the receive power value is less than a preset power threshold; and
if the receive power value is less than the power threshold, determine that the non-reserved channel is in an idle state; or if the receive power value is greater than or equal to the power threshold, determine that the non-reserved channel is in a busy state.

The apparatus further includes: a determining unit 850, configured to determine a transmission status of the apparatus on the first reserved channel; and
the identification unit 810 is specifically configured to: when the transmission status of the apparatus on the first reserved channel is a non-sending state, identify whether the non-reserved channel is in an idle state.

The sending unit 830 is specifically configured to: when the backoff procedure ends and the transmission status of the apparatus on the first reserved channel is a sending state, send the channel reservation frame on the non-reserved channel; and
the identification unit 810 is specifically configured to: when the backoff procedure ends and the transmission status of the apparatus on the first reserved channel is a receiving state, identify whether the non-reserved channel is in an idle state.

When the apparatus is specifically a station STA with no data to send, the sending unit 830 is specifically configured to: when the backoff procedure ends and a transmission status of the first device on the first reserved channel is a receiving state, send the channel reservation frame on the non-reserved channel.

When the apparatus is specifically an access point AP, as shown in FIG. 9, the apparatus further includes: a receiving unit 910, configured to receive a first control frame sent by the first device, where the first control frame includes identifier information of a third reserved channel reserved by the first device; and
the access unit 840 is further configured to perform data transmission with the first device on any one of the first reserved channel, the second reserved channel, or the third reserved channel according to the identifier information of the third reserved channel.

When the apparatus is specifically a station STA, the sending unit 830 is further configured to send a second control frame to the first device, where the second control frame includes identifier information of the second reserved channel, so that the first device performs data transmission with the STA on the first reserved channel and the second reserved channel according to the identifier information of the second reserved channel.

The control frame may be a frame that is sent independently, or may be included in the channel reservation frame, which is not limited in this patent.

Therefore, according to the multi-channel access apparatus provided in this embodiment of the present invention, the apparatus performs data transmission with a first device on a first reserved channel, and at the same time, identifies whether a non-reserved channel is in an idle state; when the non-reserved channel is in an idle state, the apparatus triggers a backoff procedure and sends a channel reservation frame on the non-reserved channel; the apparatus uses the non-reserved channel as a second reserved channel and performs data transmission with the first device on the first reserved channel and the second reserved channel. Therefore, after reserving some channels, a station constantly reserves new idle channels in a data transmission process, and performs data transmission by using the reserved channels and the newly reserved idle channels, thereby improving channel utilization efficiency and saving channel resources.

### Embodiment 6

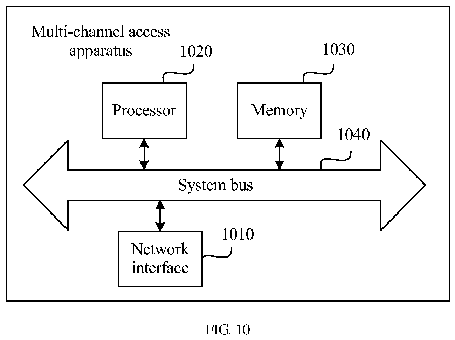

Accordingly, this embodiment of the present invention provides a multi-channel access apparatus, which is used to implement the multi-channel access method in the foregoing embodiments. The apparatus performs data transmission with a first device on a first reserved channel, and as shown in FIG. 10, the apparatus includes a network interface 1010, a processor 1020, and a memory 1030. A system bus 1040 is configured to connect the network interface 1010, the processor 1020, and the memory 1030.

The network interface 1010 is configured to interact and communicate with the first device.

The memory 1030 may be a permanent memory such as a hard disk drive and a flash memory. The memory 1030 is configured to store an application program, where the application program includes an instruction that may be used to enable the processor 1020 to access and execute the following processes:
identifying whether a non-reserved channel except the first reserved channel is in an idle state;
triggering a backoff procedure if the non-reserved channel is in an idle state;
sending a channel reservation frame on the non-reserved channel after the backoff procedure ends, where the channel reservation frame is used to enable the apparatus to use the non-reserved channel as a second reserved channel; and
performing data transmission with the first device on the first reserved channel and the second reserved channel.

Further, the instruction that is in the application program and that may be used to enable the processor 1020 to execute the process of identifying whether a non-reserved channel except the first reserved channel is in an idle state is:
acquiring a receive power value of the non-reserved channel within a preset time;
determining whether the receive power value is less than a preset power threshold; and
if the receive power value is less than the power threshold, determining that the non-reserved channel is in an idle state; or if the receive power value is greater than or equal to the power threshold, determining that the non-reserved channel is in a busy state.

Further, the application program further includes an instruction that may be used to enable the processor 1020 to execute the following processes:
determining a transmission status of the apparatus on the first reserved channel; and
when the transmission status of the apparatus on the first reserved channel is in a non-sending state, identifying whether the non-reserved channel is in an idle state.

Further, the instruction that is in the application program and that may be used to enable the processor 1020 to execute the process of sending a channel reservation frame on the non-reserved channel is:
when the backoff procedure ends and the transmission status of the apparatus on the first reserved channel is a sending state, sending the channel reservation frame on the non-reserved channel; and
when the backoff procedure ends and the transmission status of the apparatus on the first reserved channel is a receiving state, identifying whether the non-reserved channel is in an idle state.

Further, when the apparatus is specifically a station STA with no data to send, the instruction that is in the application program and that may be used to enable the processor 920 to execute the process of sending a channel reservation frame on the non-reserved channel is:
when the backoff procedure ends and a transmission status of the first device on the first reserved channel is a receiving state, sending the channel reservation frame on the non-reserved channel.

Further, when the apparatus is specifically an access point AP, the application program further includes an instruction that may be used to enable the processor 920 to execute the following processes:
receiving a first control frame sent by the first device, where the first control frame includes identifier information of a third reserved channel reserved by the first device; and
performing data transmission with the first device on any one of the first reserved channel, the second reserved channel, or the third reserved channel according to the identifier information of the third reserved channel.

Further, when the apparatus is specifically a station STA, the application program further includes an instruction that may be used to enable the processor 920 to execute the following process:
sending a second control frame to the first device, where the second control frame includes identifier information of the second reserved channel, so that the second device performs data transmission with the STA on the first reserved channel and the second reserved channel according to the identifier information of the second reserved channel.

The control frame may be a frame that is sent independently, or may be included in the channel reservation frame, which is not limited in this patent.

Therefore, according to the multi-channel access apparatus provided in this embodiment of the present invention, the apparatus performs data transmission with a first device on a first reserved channel, and at the same time, identifies whether a non-reserved channel is in an idle state; when the non-reserved channel is in an idle state, the apparatus triggers a backoff procedure and sends a channel reservation frame on the non-reserved channel; the apparatus uses the non-reserved channel as a second reserved channel and performs data transmission with the first device on the first reserved channel and the second reserved channel. Therefore, after reserving some channels, a station constantly reserves new idle channels in a data transmission process, and performs data transmission by using the reserved channels and the newly reserved idle channels, thereby improving channel utilization efficiency and saving channel resources.

Persons skilled in the art may further be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. Persons skilled in the art may use different methods to implement the described functions for each particular application, but it should not be considered that the implementation goes beyond the scope of the present invention.

Steps of methods or algorithms described in the embodiments disclosed in this specification may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementation manners, the objective, technical solutions, and benefits of the present invention are further described in detail. It should be understood that the foregoing descriptions are merely specific implementation manners of the present invention, but are not intended to limit the protection scope of the present invention. Any modification, equivalent replacement, or improvement made without departing from the principle of the present invention should fall within the protection scope of the present invention.

## Claims

1. A multi-channel access method, wherein a first device performs data transmission with a second device on a first reserved channel, and the method comprises:
• determining, by the first device, a transmission status of the first device on the first reserved channel;
• if the transmission status of the first device on the first reserved channel is a non-sending state, identifying, by the first device, whether a non-reserved channel except the first reserved channel is in an idle state (step 210);
• triggering, by the first device, a backoff procedure if the non-reserved channel is in the idle state (step 220);
• if the backoff procedure ends and the transmission status of the first device on the first reserved channel is a sending state, sending, by the first device, a channel reservation frame on the non-reserved channel, wherein the channel reservation frame is used to enable the first device to use the non-reserved channel as a second reserved channel (step 230); and
if the backoff procedure ends and the transmission status of the first device on the first reserved channel is a receiving state, continuing identifying, by the first device, whether the non-reserved channel is in the idle state, and sending the channel reservation frame on the non-reserved channel if the non-reserved channel is in the idle state when the transmission status of the first device on the first reserved channel is the sending state (step 230); and
• performing, by the first device, data transmission with the second device on the first reserved channel and the second reserved channel (step 240).

2. The multi-channel access method according to claim 1, wherein the identifying, by the first device, whether the non-reserved channel except the first reserved channel is in the idle state specifically comprises:
acquiring, by the first device, a receive power value of the non-reserved channel within a preset time;
determining, by the first device, whether the receive power value is less than a preset power threshold; and
if the receive power value is less than the power threshold, determining, by the first device, that the non-reserved channel is in the idle state; or if the receive power value is greater than or equal to the power threshold, determining, by the first device, that the non-reserved channel is in a busy state.

3. The multi-channel access method according to claim 1, wherein if the first device is specifically a station STA with no data to send, the sending, by the first device, the channel reservation frame on the non-reserved channel specifically comprises:
when the backoff procedure ends and the transmission status of the second device on the first reserved channel is the receiving state, sending, by the STA, the channel reservation frame on the non-reserved channel.

4. The multi-channel access method according to any one of claims 1 to 3, wherein when the first device is specifically an access point AP, the method further comprises:
receiving, by the AP, a first control frame sent by the second device, wherein the first control frame comprises identifier information of a third reserved channel reserved by the second device; and
performing, by the AP, data transmission with the second device on any one of the first reserved channel, the second reserved channel, or the third reserved channel according to the identifier information of the third reserved channel.

5. The multi-channel access method according to any one of claims 1 to 4, wherein when the first device is specifically a station STA, after accessing, by the first device, the second reserved channel, the method further comprises:
sending, by the STA, a second control frame to the second device, wherein the second control frame comprises identifier information of the second reserved channel, so that the second device performs data transmission with the STA on the first reserved channel and the second reserved channel according to the identifier information of the second reserved channel.

6. A multi-channel access apparatus configured to perform any of the methods according to claims 1 - 5.

## Patentansprüche

1. Mehrkanal-Zugangsverfahren, wobei eine erste Einrichtung eine Datenübertragung mit einer zweiten Einrichtung auf einem ersten reservierten Kanal durchführt und das Verfahren Folgendes umfasst:
Bestimmen, durch die erste Einrichtung, eines Übertragungsstatus der ersten Einrichtung auf dem ersten reservierten Kanal;
falls der Übertragungsstatus der ersten Einrichtung auf dem ersten reservierten Kanal ein Nichtsendezustand ist, Identifizieren, durch die erste Einrichtung, ob sich ein nicht reservierter Kanal, außer dem ersten reservierten Kanal, in einem Ruhezustand befindet (Schritt 210);
Auslösen, durch die erste Einrichtung, einer "Backoff"-Prozedur, falls sich der nicht reservierte Kanal im Ruhezustand befindet (Schritt 220);
falls die "Backoff"-Prozedur endet und der Übertragungsstatus der ersten Einrichtung auf dem ersten reservierten Kanal ein Sendezustand ist, Senden, durch die erste Einrichtung, eines Kanalreservierungsrahmens auf dem nicht reservierten Kanal,
wobei der Kanalreservierungsrahmen dazu verwendet wird, der ersten Einrichtung zu ermöglichen, den nicht reservierten Kanal als einen zweiten reservierten Kanal zu verwenden (Schritt 230); und,
falls die "Backoff"-Prozedur endet und der Übertragungsstatus der ersten Einrichtung auf dem ersten reservierten Kanal ein Empfangszustand ist, Fortfahren mit dem Identifizieren, durch die erste Einrichtung, ob sich der nicht reservierte Kanal im Ruhezustand befindet, und Senden des Kanalreservierungsrahmens auf dem nicht reservierten Kanal, falls sich der nicht reservierte Kanal im Ruhezustand befindet, wenn der Übertragungsstatus der ersten Einrichtung auf dem ersten reservierten Kanal der Sendezustand ist (Schritt 230); und
Durchführen, durch die erste Einrichtung, einer Datenübertragung mit der zweiten Einrichtung auf dem ersten reservierten Kanal und dem zweiten reservierten Kanal (Schritt 240).

2. Mehrkanal-Zugangsverfahren nach Anspruch 1, wobei das Identifizieren, durch die erste Einrichtung, ob sich der nicht reservierte Kanal, außer dem ersten reservierten Kanal, im Ruhezustand befindet, spezifisch Folgendes umfasst:
Erfassen, durch die erste Einrichtung, eines Empfangsleistungswerts des nicht reservierten Kanals innerhalb einer voreingestellten Zeit;
Bestimmen, durch die erste Einrichtung, ob der Empfangsleistungswert geringer ist als eine voreingestellte Leistungsschwelle; und,
falls der Empfangsleistungswert geringer ist als die Leistungsschwelle, Bestimmen, durch die erste Einrichtung, dass sich der nicht reservierte Kanal im Ruhezustand befindet; oder, falls der Empfangsleistungswert größer oder gleich der Leistungsschwelle ist, Bestimmen, durch die erste Einrichtung, dass sich der nicht reservierte Kanal in einem Aktivzustand befindet.

3. Mehrkanal-Zugangsverfahren nach Anspruch 1, wobei, falls die erste Einrichtung spezifisch eine Station STA ohne zu sendende Daten ist, das Senden, durch die erste Einrichtung, des Kanalreservierungsrahmens auf dem nicht reservierten Kanal spezifisch Folgendes umfasst:
wenn die "Backoff"-Prozedur endet und der Übertragungsstatus der zweiten Einrichtung auf dem ersten reservierten Kanal der Empfangszustand ist, Senden, durch die STA, des Kanalreservierungsrahmens auf dem nicht reservierten Kanal.

4. Mehrkanal-Zugangsverfahren nach einem der Ansprüche 1 bis 3, wobei, wenn die erste Einrichtung spezifisch ein Zugangspunkt AP ist, das Verfahren ferner Folgendes umfasst:
Empfangen, durch den AP, eines ersten Steuerrahmens, der durch die zweite Einrichtung gesendet wird, wobei der erste Steuerrahmen Kennungsinformationen eines dritten reservierten Kanals, der durch die zweite Einrichtung reserviert wird, umfasst; und
Durchführen, durch den AP, einer Datenübertragung mit der zweiten Einrichtung auf einem beliebigen des ersten reservierten Kanals, des zweiten reservierten Kanals oder des dritten reservierten Kanals gemäß den Kennungsinformationen des dritten reservierten Kanals.

5. Mehrkanal-Zugangsverfahren nach einem der Ansprüche 1 bis 4, wobei, wenn die erste Einrichtung spezifisch eine Station STA ist, das Verfahren nach dem Zugreifen, durch die erste Einrichtung, auf den zweiten reservierten Kanal, ferner Folgendes umfasst:
Senden, durch die STA, eines zweiten Steuerrahmens zur zweiten Einrichtung, wobei der zweite Steuerrahmen Kennungsinformationen des zweiten reservierten Kanals umfasst, sodass die zweite Einrichtung eine Datenübertragung mit der STA auf dem ersten reservierten Kanal und dem zweiten reservierten Kanal gemäß den Kennungsinformationen des zweiten reservierten Kanals durchführt.

6. Mehrkanal-Zugangsvorrichtung, die dazu ausgelegt ist, ein beliebiges der Verfahren nach den Ansprüchen 1-5 durchzuführen.

## Revendications

1. Procédé d'accès multicanal, dans lequel un premier dispositif effectue une transmission de données avec un second dispositif sur un premier canal réservé, et le procédé consiste :
• à déterminer, au moyen du premier dispositif, un état de transmission du premier dispositif sur le premier canal réservé ;
• si l'état de transmission du premier dispositif sur le premier canal réservé est un état de non envoi, à identifier, au moyen du premier dispositif, si un canal non réservé, à l'exception du premier canal réservé, se trouve dans un état de repos (étape 210) ;
• à déclencher, au moyen du premier dispositif, une procédure de réduction de puissance si le canal non réservé se trouve dans l'état de repos (étape 220) ;
• si la procédure de réduction de puissance est terminée et si l'état de transmission du premier dispositif sur le premier canal réservé est un état d'envoi, à envoyer, au moyen du premier dispositif, une trame de réservation de canal sur le canal non réservé, dans lequel la trame de réservation de canal est utilisée pour permettre au premier dispositif d'utiliser le canal non réservé en tant que deuxième canal réservé (étape 230) ; et
si la procédure de réduction de puissance est terminée et si l'état de transmission du premier dispositif sur le premier canal réservé est un état de réception, à continuer à identifier, au moyen du premier dispositif, si le canal non réservé se trouve dans l'état de repos et à envoyer la trame de réservation de canal sur le canal non réservé si le canal non réservé se trouve dans l'état de repos lorsque l'état de transmission du premier dispositif sur le premier canal réservé est l'état d'envoi (étape 230) ; et
• à effectuer, au moyen du premier dispositif, une transmission de données avec le second dispositif sur le premier canal réservé et le deuxième canal réservé (étape 240).

2. Procédé d'accès multicanal selon la revendication 1, dans lequel l'identification, au moyen du premier dispositif, que le canal non réservé, à l'exception du premier canal réservé, se trouve dans l'état de repos, consiste spécifiquement :
à acquérir, au moyen du premier dispositif, une valeur de puissance de réception du canal non réservé pendant un temps prédéfini ;
à déterminer, au moyen du premier dispositif, si la valeur de puissance de réception est inférieure à un seuil de puissance prédéfini ; et
si la valeur de puissance de réception est inférieure au seuil de puissance, à déterminer, au moyen du premier dispositif, que le canal non réservé se trouve dans l'état de repos ;
ou si la valeur de puissance de réception est supérieure ou égale au seuil de puissance, à déterminer, au moyen du premier dispositif, que le canal non réservé se trouve dans un état occupé.

3. Procédé d'accès multicanal selon la revendication 1, dans lequel, si le premier dispositif est spécifiquement une station (STA) n'ayant pas de données à envoyer, l'envoi, par le premier dispositif, de la trame de réservation de canal sur le canal non réservé consiste spécialement :
lorsque la procédure de réduction de puissance est terminée et que l'état de transmission du second dispositif sur le premier canal réservé est l'état de réception, à envoyer, au moyen de la station, la trame de réservation de canal sur le canal non réservé.

4. Procédé d'accès multicanal selon l'une quelconque des revendications 1 à 3, dans lequel, lorsque le premier dispositif est spécialement un point d'accès (AP), le procédé consiste en outre :
à recevoir, au moyen du point d'accès, une première trame de commande envoyée par le second dispositif, dans lequel la première trame de commande comporte des informations d'identifiant d'un troisième canal réservé qui est réservé par le second dispositif ; et
à effectuer, au moyen du point d'accès, une transmission de données avec le second dispositif sur l'un quelconque du premier canal réservé, du deuxième canal réservé ou du troisième canal réservé en fonction des informations d'identifiant du troisième canal réservé.

5. Procédé d'accès multicanal selon l'une quelconque des revendications 1 à 4, dans lequel, lorsque le premier dispositif est spécialement une station (STA), après l'accès, par le premier dispositif, au deuxième canal réservé, le procédé consiste en outre :
à envoyer, au moyen de la station, une seconde trame de commande au second dispositif, dans lequel la seconde trame de commande comporte des informations d'identifiant du deuxième canal réservé de telle sorte que le second dispositif effectue une transmission de données avec la station sur le premier canal réservé et le deuxième canal réservé en fonction des informations d'identifiant du deuxième canal réservé.

6. Appareil d'accès multicanal configuré pour réaliser l'un quelconque des procédés selon les revendications 1 à 5.
